# EUROPEAN PATENT SPECIFICATION

(11) **EP 4 520 954 B1**
(45) Date of publication and mention of the grant of the patent: **01.04.2026**
(21) Application number: 23195596.4
(22) Date of filing: 06.09.2023
(51) Int. Cl.: F03D 1/06, F03D 7/02

(54) **DEVICE AND METHOD OF PROTECTING A HYDRAULIC PITCH CYLINDER OF A ROTOR BLADE FOR A WIND TURBINE**
VORRICHTUNG UND VERFAHREN ZUM SCHUTZ EINES HYDRAULISCHEN SPITZENZYLINDERS EINES ROTORBLATTS FÜR EINE WINDTURBINE
DISPOSITIF ET PROCÉDÉ DE PROTECTION D'UN CYLINDRE DE PAS HYDRAULIQUE D'UNE PALE DE ROTOR POUR UNE ÉOLIENNE

(43) Date of publication of application: 12.03.2025
(73) Proprietor: Siemens Gamesa Renewable Energy A/S, 7330 Brande (DK)
(72) Inventor: Jespersen, Kim Stave Holm, 8700 Horsens (DK); Würtz, Joachim Thagaard, 8600 Silkeborg (DK)
(74) Representative: SGRE-Association

(56) References cited:
- EP-A1- 3 098 441
- EP-A2- 2 290 228
- EP-B1- 2 643 585
- WO-A1-2022/268277
- CN-U- 207 583 556
- CN-U- 211 422 826
- CN-U- 211 975 274
- US-A1- 2023 011 388

## Description

### Field of invention

The present invention relates to a device and a method of protecting a hydraulic pitch cylinder of a rotor blade for a wind turbine.

During high winds, the wind turbine will pitch the rotor blades out of the wind, thereby decreasing the wind affected area of the rotor blade. This is done by releasing hydraulic pressure in the pitch cylinders which will extend them to their fully extended stroke/position. An extreme wind gust could in specific conditions create a pressure on the rotor blade that would tend to axially load the pitch cylinders. Previous pitch cylinder designs have been able to absorb this load in existing wind turbines, wherein the pitch cylinders are configured to withstand and receive extreme loads at the stop positions. However, an increase in rotor blade size in recent development projects creates the need to control this extension of the pitch cylinders, as wind turbines can produce loads which would exceed the capacity of the pitch cylinders. Examples of prior art solutions can be found in documents EP 3 098 441 A1, CN 211 975 274 U and CN 211 422 826 U.

### Summary of the Invention

There may be a need for a device and a method of protecting a hydraulic pitch cylinder of a rotor blade for a wind turbine. This need may be met by the subject matters according to the independent claims. The present invention is further developed as set forth in the dependent claims.

According to a first aspect of the invention, a device for protecting a hydraulic pitch cylinder of a rotor blade for a wind turbine according to claim 1 is provided. The device comprises a base of the rotor blade, the pitch cylinder, which comprises a first bracket at one end and a second bracket at another end, wherein the first bracket is configured to be connected to a rotor of the wind turbine and the second bracket is connected to the base of the rotor blade of the wind turbine, and a mechanical stop device which is configured to mechanically limit a maximum relative rotation between the base of the rotor blade and the rotor of the wind turbine so that a stroke of the pitch cylinder is kept smaller than a maximum permissible or maximum possible stroke of the pitch cylinder.

In the context of the present invention, the term "maximum permissible or maximum possible stroke of the pitch cylinder" may refer to a stroke of the pitch cylinder which can either not physically be exceeded, for example due to an internal mechanical abutment within the cylinder or due to other mechanical restrictions, or which is limited by prescribed use conditions. The above mentioned term may also refer to a stroke of the cylinder, which is intentionally reduced or set to a known limit value.

The pitch cylinder can be designed for loads during normal operation as well as for a number of strokes during its service life. Under all extreme loads, where the deformation of the system would exceed the nominal stroke of the pitch cylinder, the load will be shared by the mechanical stop device and the pitch cylinder. The mechanical stop device can be the primary load-bearing element as it usually has a higher stiffness than the pitch cylinder.

In an embodiment, the mechanical stop device comprises a plate having an opening and a pin arranged within the opening with a gap between the pin and the opening. The pin is connected to one of the rotor of the wind turbine and the base of the rotor blade, and the plate is connected to the other one of the rotor of the wind turbine and the base of the rotor blade. The gap is dimensioned to determine a moving path along which the pin can be moved within the opening so as to limit the maximum relative rotation between the base of the rotor blade and the rotor of the wind turbine.

The plate absorbs excessive loads by a mechanical function, where the pin engages the opening in the plate by abutting against an abutment surface formed by the opening. The plate in turn can be mounted to a reinforcement plate that is mounted on a blade bearing, for example. Under all extreme loads, where the deformation of the system would lead to a pin movement beyond the gap, the load is shared between the mechanical stop device and the pitch cylinder.

In an embodiment, the pin is driven by a first actuator to enter into or retract from the opening. Thereby, it is possible to retract the pin from the opening, for instance during an ordinary pitch operation of the rotor blade. The mechanical stop device can thus be activated and deactivated, i.e., flexibly be used. During ordinary pitching, a possible deformation of cylinder fittings and reinforcement plates can be avoided. The mechanical stop device does not move the pin into the opening during normal pitching to avoid a system wearing against the pin, which minimizes the risk of fretting and noise by an abutment of the pin against an abutment surface of the opening in the plate.

By adjustments of the plate, tolerances of the system can be controlled, and a permanent gap between the pin and opening the plate can be defined and ensures that the stroke of the pitch cylinder is reliably reduced to a known value.

In an embodiment, the opening comprises at least one abutment surface for an abutment of the pin. In an embodiment, the opening comprises a shape of an elongated slot.

In an embodiment, the opening of the plate comprises a non-circular profile to provide a plurality of variable moving paths for the pin in accordance with a plurality of rotational positions of the plate, wherein each moving path is delimited by at least one abutment surface for an abutment of the pin. In an embodiment, the plate has a circular outer circumference and is rotatably received the base of the rotor blade, for example within a reinforcement member which is connected to the blade bearing. In an embodiment, the plate is rotatable driven by a second actuator. At higher loads, the plate according to this embodiment is preferred as it may have a larger plate with much more adjustment options.

In an embodiment, the second bracket is connected to the base of the rotor blade of the wind turbine at a location which is arranged radially further inwards than the mechanical stop device. Thereby, the mechanical stop device serves as the primary load-bearing element, both due to the stiffness difference as mentioned above and in addition by a leverage because of the higher radius where the mechanical stop device is arranged.

In an embodiment, the second bracket is connected to the base of the rotor blade by means of bolts passing through elongated holes which are provided in the base of the rotor blade. This enables a further adjustment option for the pitch stroke by slightly shifting or adjusting the second bracket with reference to the base of the rotor blade.

According to a second aspect of the invention, a wind turbine comprises a rotor having a plurality of rotor blades, each rotor blade being configured to be pitched by a pitch angle about a pitch axis of the rotor blade, the rotor being mounted to a nacelle to rotate about a rotation axis with a rotor speed to drive a generator for producing electrical energy, and the nacelle being mounted to a tower to rotate about a yaw axis. The wind turbine comprises the above-described device for protecting the pitch cylinder according to claim 1, wherein the first bracket is connected to the rotor of the wind turbine.

In an embodiment, the base of the rotor blade is connected to a blade bearing, and the pin is connected to the rotor of the wind turbine.

In an embodiment, the plate is replaceable mounted the base of the rotor blade. For example, the base can be a reinforcement member which is connected to a blade bearing.

In an embodiment, the wind turbine further comprises a further plate having another opening with another shape or another dimension than the opening, wherein the pin is also configured to be arranged within the other opening with another gap between the pin and the other opening. The pin is connected to one of the rotor and the base of the rotor blade, and the further plate is connected to the other one of the rotor and the base of the rotor blade. The other opening is dimensioned to determine another moving path along which the pin can be moved so as to limit the maximum relative rotation between the base of the rotor blade and the rotor of the wind turbine so that the stroke of the pitch cylinder is kept smaller than the maximum permissible or maximum possible stroke of the pitch cylinder. The plate as well as the further plate are replaceable connectable to the other one of the rotor and the base of the rotor blade.

According to a third aspect of the invention, a method of protecting a hydraulic pitch cylinder of a rotor blade for a wind turbine by means of the above described device for protecting the pitch cylinder of the rotor blade for the wind turbine according to claim 11 is provided. The device comprises a first actuator for driving the pin such that the pin is driven to enter into or retract from the opening. The method comprises steps of driving the first actuator to retract the pin from the opening, and pitching the rotor blade, when the pin is retracted from the opening.

Thereby, the mechanical stop device can be activated and deactivated, i.e., flexibly be used. During ordinary pitching, a possible deformation of cylinder fittings and reinforcement plates can be avoided. The mechanical stop device does not move the pin into the opening during normal pitching to avoid a system wearing against the pin, which minimizes the risk of fretting and noise by an abutment of the pin against an abutment surface of the opening in the plate.

In an embodiment, the wind turbine used in the method is embodied as described above.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof;
- Fig. 2: shows a device for protecting a hydraulic pitch cylinder of a rotor blade for a wind turbine according to an embodiment.
- Fig. 3: shows a mechanical stop device according to an embodiment.
- Fig. 4: shows a cross-section of the mechanical stop device of Fig. 3.
- Fig. 5: shows a plate according to an embodiment.
- Fig. 6: shows a plate and a pin according to an embodiment.
- Fig. 7: shows another plate and a pin according to an embodiment.
- Fig. 8: shows the other plate and the pin according to the embodiment of Fig. 7 at another rotational position.
- Fig. 9: shows a base of a rotor blade according to an embodiment.

### Detailed Description

The illustrations in the drawings are schematically. It is noted that in different figures, similar or identical elements are provided with the same reference signs.

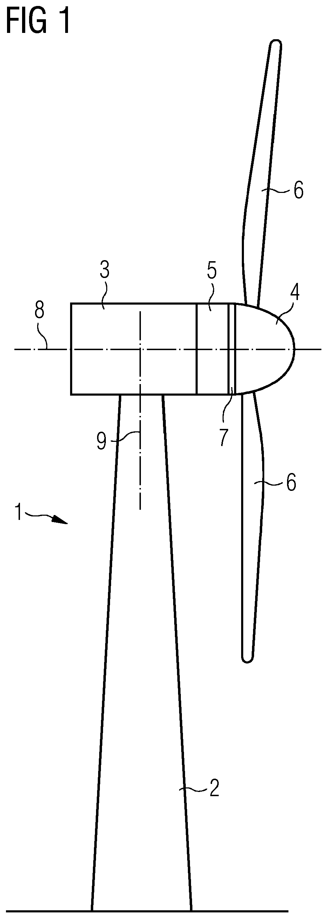

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as a yaw axis 9.

The wind turbine 1 also comprises a rotor 4 with three rotor blades 6 (of which two rotor blades 6 are depicted in Fig. 1). Each rotor blade 6 is configured to be pitched by a pitch angle about a pitch axis of the rotor blade 6. The rotor 4 is mounted rotatable about a rotation axis 8 (rotor axis) with regard to the nacelle 3 by means of a main bearing 7.

The wind turbine 1 furthermore comprises a generator 5. The generator 5 in turn comprises a rotor connecting the generator 5 with the rotor 4. If the rotor 4 is connected directly to the generator 5, the wind turbine 1 is referred to as a gearless, direct-driven wind turbine. Such a generator 5 is referred as direct drive generator 5. As an alternative, the rotor 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the rotor 4 into electrical energy in the shape of an AC power.

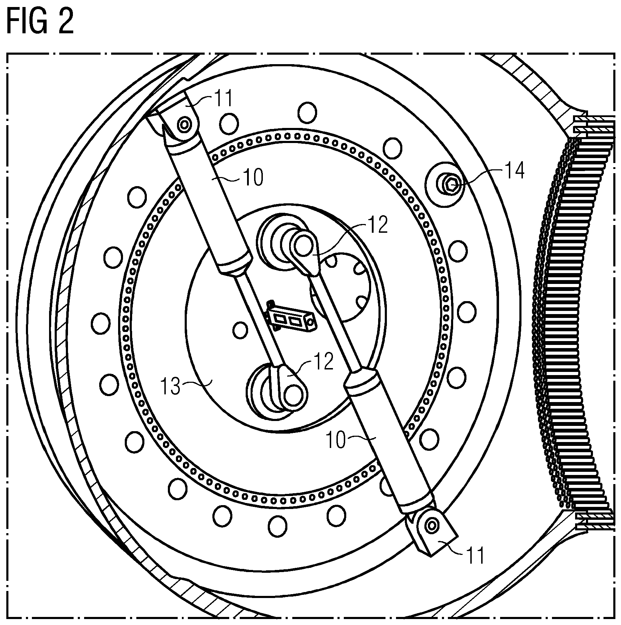

**Fig. 2** shows a device for protecting a hydraulic pitch cylinder 10 of the rotor blade 6 for the wind turbine 1 according to an embodiment. The device for protecting the hydraulic pitch cylinder 10 comprises a base 13 of the rotor blade 6 and the pitch cylinder 10, which comprises a first bracket 11 at one end and a second bracket 12 at another end. The first bracket 11 is sometimes referred as a rearend pitch cylinder bracket, and the second bracket 11 is sometimes referred as a frontend pitch cylinder bracket.

The first bracket 11 is connected to the rotor 4 of the wind turbine 1 and the second bracket 12 is connected to the base 13 of the rotor blade 6 of the wind turbine 1. The second bracket 12 is connected to the base 13 of the rotor blade 6 of the wind turbine 1 at a location which is arranged radially further inwards than the mechanical stop device 14. The device in Fig. 2 comprises two similar pitch cylinders 10.

The device for protecting the hydraulic pitch cylinder 10 further comprises a mechanical stop device 14 which is configured to mechanically limit a maximum relative rotation between the base 13 of the rotor blade 6 and the rotor 4 of the wind turbine 1 so that a stroke of the pitch cylinder 10 is kept smaller than a maximum permissible or maximum possible stroke of the pitch cylinder 10.

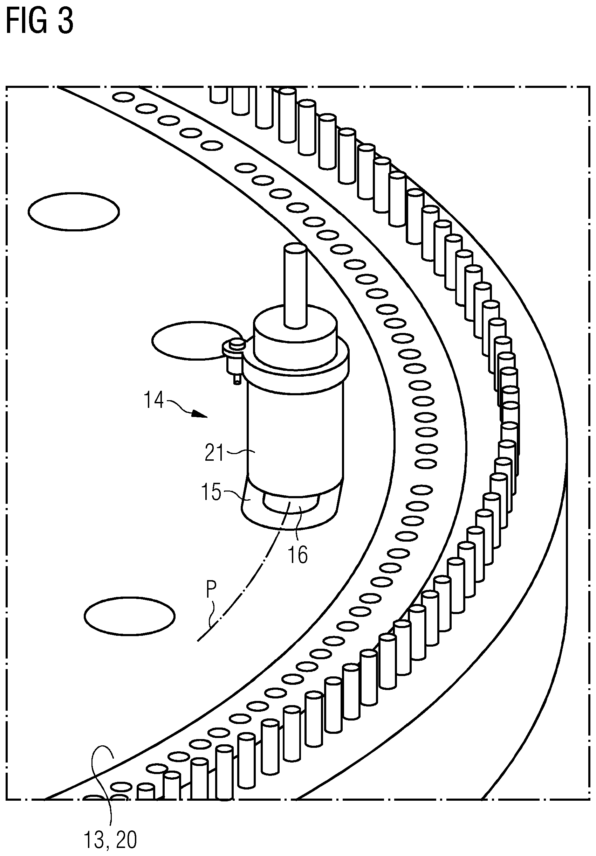

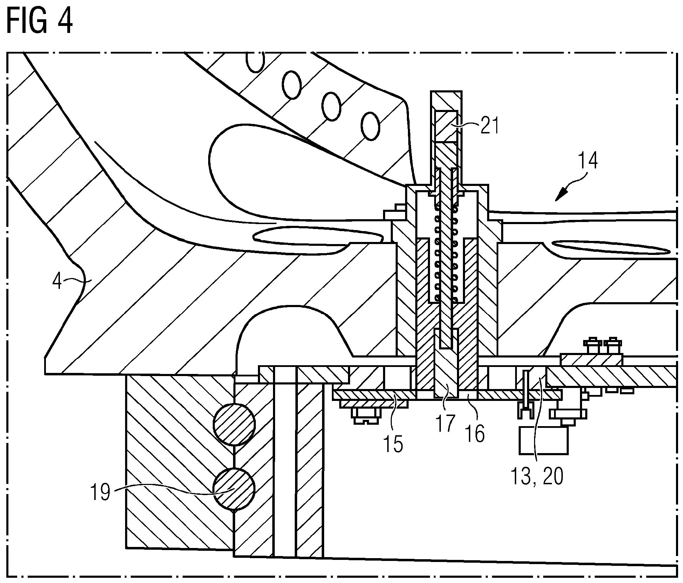

**Fig. 3** shows the mechanical stop device 14 according to an embodiment, and **Fig. 4** shows a cross-section of the mechanical stop device 14 of Fig. 3. The mechanical stop device 14 comprises a plate 15 having an opening 16 and a pin 17 arranged within the opening 16 with a gap between the pin 17 and the opening 16. In the present embodiment, the pin 17 is connected to the rotor 4, and the plate 15 is connected to the base 13 of the rotor blade 6. In a modified embodiment, the pin 17 can be connected to the base 13 of the rotor blade 6, and the plate 15 can be connected to the rotor 4.

The gap between the pin 17 and the opening 16 is dimensioned to determine a moving path P along which the pin 17 can be moved within the opening 16 so as to limit the maximum relative rotation between the base 13 of the rotor blade 6 and the rotor 4 of the wind turbine 1.

The pin 17 is driven by a first actuator 21 to enter into or retract from the opening 16. The first actuator 21 can be embodied as hydraulic actuator or a solenoid. In operation of the wind turbine 1 and if the mechanical stop device 14 is provided with the first actuator 21, the first actuator 21 can be driven to retract the pin 17 from the opening 16, and the rotor blade 6 can be pitched, when the pin 17 is retracted from the opening 16. The mechanical stop device 14 can thus be activated and deactivated, i.e., flexibly be used. During ordinary pitching, a possible deformation of cylinder fittings and reinforcement plates such as the base 13 of the rotor blade 6 can be avoided. The mechanical stop device 14 does not move the pin 17 into the opening 16 during normal pitches to stop to avoid a system wearing by the abutting pin 17, which minimizes the risk of fretting and noise by an abutment of the pin 16 against the abutment surface 18 of the opening 16 in the plate 15.

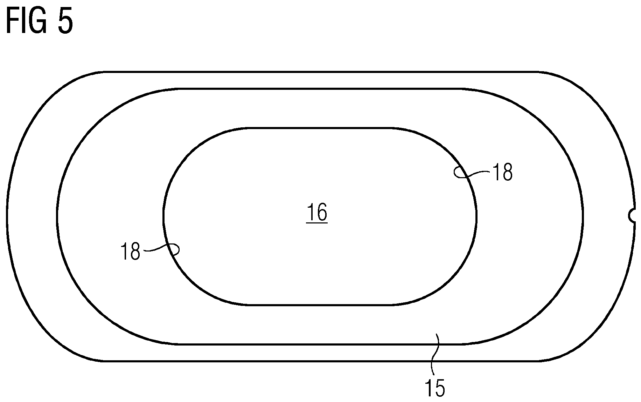

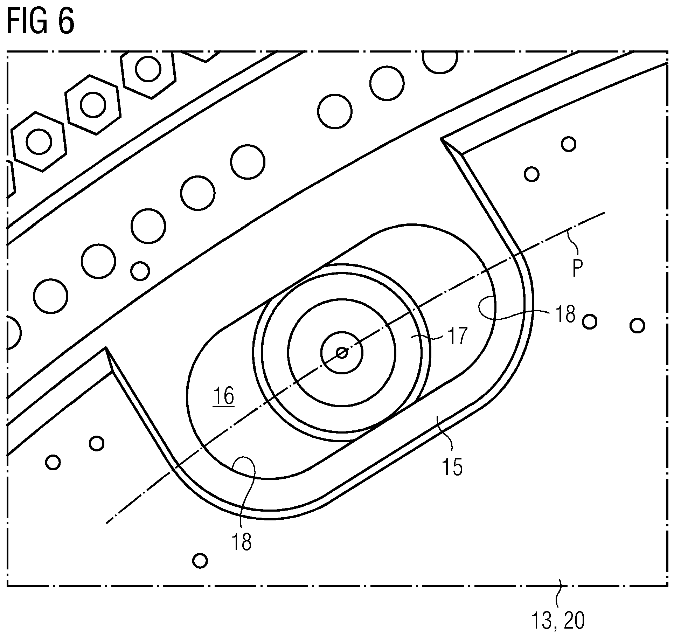

**Fig. 5** shows a plate 15 according to an embodiment, and **Fig. 6** shows a plate 15 and a pin 17 according to an embodiment. The opening 16 comprises two abutment surfaces 18 at the left-hand side and at the right-hand side for an abutment of the pin 17. In this embodiment, the opening 16 comprises a shape of an elongated slot. In a modified embodiment, particularly in embodiments with long slots, the slot can have a curved longitudinal axis.

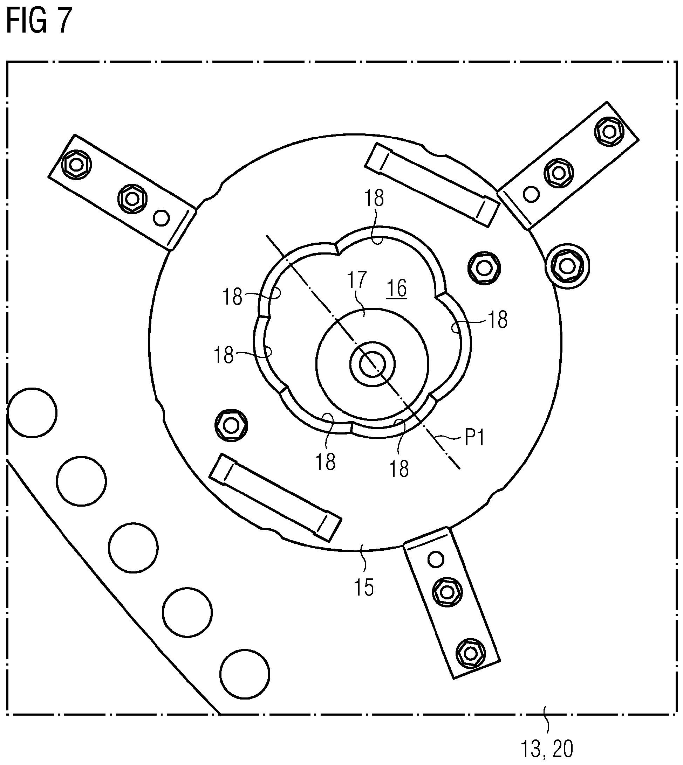

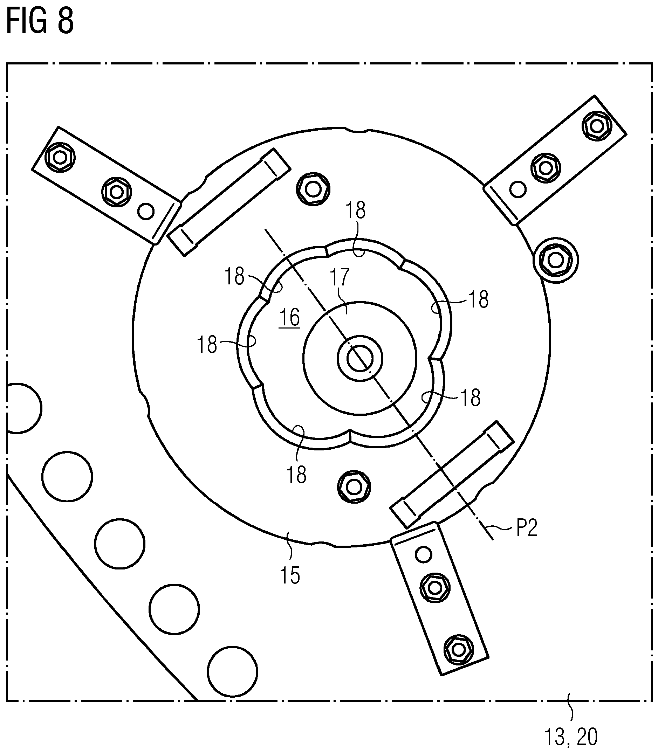

**Fig. 7** shows another plate 15 and a pin 17 according to an embodiment, and **Fig. 8** shows the other plate 15 and the pin 17 according to the embodiment of Fig. 7 at another rotational position. The opening 16 comprises a non-circular profile to provide a plurality of variable moving paths P for the pin 17 in accordance with a plurality of rotational positions of the plate 15, wherein each moving path P is delimited by at least one abutment surface 18 for an abutment of the pin 17. The plate 15 has a circular outer circumference and is rotatably received within a reinforcement member 20 of the base 13 of the rotor blade 6. The plate 15 can be rotatable driven by a second actuator, or it can be manually rotated and fixed at the desired rotational position. In Fig. 7, the plate 15 is rotated at a first rotational position to provide a first moving path P1, and in Fig. 8, the plate 15 is rotated at a second rotational position to provide a second moving path P2. The first and second moving paths P1 and P2 are different from each other. Particularly the gap between the opining 16 and the pin 17 in Fig. 7 is different from the gap between the opining 16 and the pin 17 in Fig. 8. At higher loads, this embodiment is preferred as the plate 15 is larger than that of Figures 5 and 6 and has many more adjustment options.

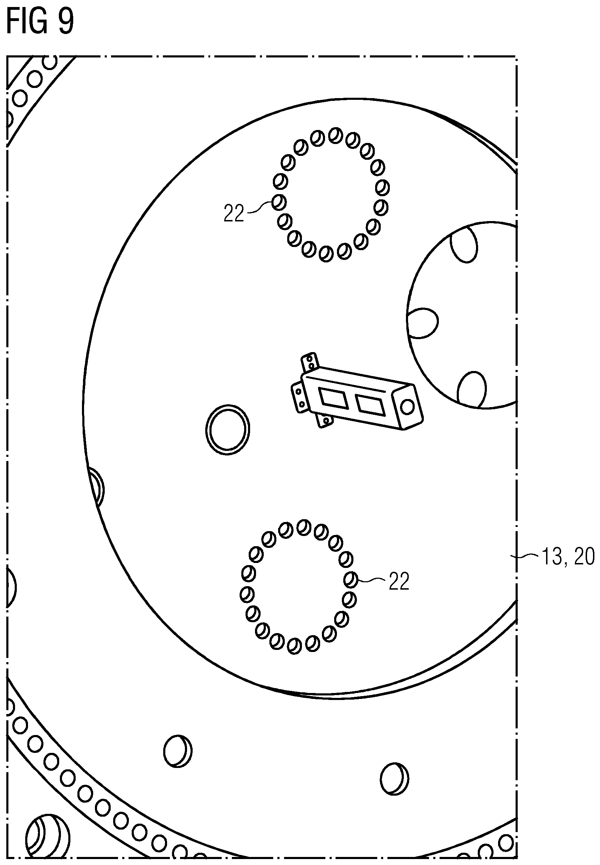

**Fig. 9** shows a base 13 of a rotor blade 6 according to an embodiment. The base 13 serves as a reinforcement member 20. The base 13 comprises a plurality of elongated holes 22. The elongated holes 22 are configured to receive bolts for an attachment of the second bracket 11 (frontend pitch cylinder bracket) of Fig. 2. The elongated holes 22 are dimensioned and configured to enable slight shifting or adjusting the second bracket 11 of the pitch cylinder 10. By adjusting or shifting the second bracket 11 of the pitch cylinder 10, the stroke of the pitch cylinder 10 as well as tolerances can be set. The elongated holes 22 are preferably arrayed along a circle with equal distances between each other.

In an embodiment, the plate 15 can be replaceable mounted to a reinforcement member 20 of the base 13 of the rotor blade 6, wherein the reinforcement member 20 is connected to a blade bearing 19. For example, a further plate (not shown) having another opening with another shape or another dimension than the opening 16 can be connected to the base 13 of the rotor blade 6 instead of the plate 15, wherein the pin 17 is also configured to be arranged within the other opening with another gap between the pin 17 and the other opening. The other opening 16 is dimensioned to determine another moving path P along which the pin 17 can be moved so as to limit the maximum relative rotation between the base 13 of the rotor blade 6 and the rotor 4 of the wind turbine 1 so that the stroke of the pitch cylinder 10 is kept smaller than the maximum permissible or maximum possible stroke of the pitch cylinder 10.

The plate 15 as well as the further plate are replaceable connectable to the base 13 of the rotor blade 6. Thereby, an appropriate plate, i.e., either the plate 15 or the further plate, can be selected and connected to the base 13 of the rotor blade 6 (or at the rotor 4) to provide a desired gap between the pin 17 and the opening 16 which enables a desired moving path P of the pin 17. As a result, an adjustment of the stroke of the pitch cylinder 10 can be achieved, in addition or alternatively to the adjustment option provided in the embodiment having the elongated holes 22 in Fig. 9.

In summary, a fine adjustment of the stroke of the pitch cylinder 10 can be achieved by at least one of:
- using the plate 15 of the embodiment in Figures 7 and 8, wherein the opening 16 comprises a non-circular profile to provide a plurality of variable moving paths P for the pin 17 in accordance with a plurality of rotational positions of the plate 15, wherein each moving path P is delimited by at least one abutment surface 18 for an abutment of the pin 17. The plate 15 can be manually rotated, or can be rotatable driven by the second actuator and fixed at the desired rotational position;
- selecting and connecting one of at least the replaceable plate 15 and the replaceable further plate (both can be in accordance with the embodiment of Figures 5 and 6) to provide a proper moving path P for the pin 17;
- providing a plurality of elongated holes 22 in the base 13 of the rotor blade 6 to enable slight shifting and adjusting of the attachment position of the second bracket 12.

By adjusting the mechanical stop device 14, the tolerances of the system can be controlled, and a permanent gap between the pin 17 and the opening 16 can be defined and ensures that the stroke of the pitch cylinder 10 is reduced to a known value.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Independent of the grammatical term usage, individuals with male, female or other gender identities are included within the term.

## Claims

1. A device for protecting a hydraulic pitch cylinder (10) of a rotor blade (6) for a wind turbine (1), the device comprising:
a base (13) of the rotor blade (6);
the pitch cylinder (10), which comprises a first bracket (11) at one end and a second bracket (12) at another end, wherein the first bracket (11) is configured to be connected to a rotor (4) of the wind turbine (1) and the second bracket (12) is connected to the base (13) of the rotor blade (6) of the wind turbine (1); and
a mechanical stop device (14) which is configured to mechanically limit a maximum relative rotation between the base (13) of the rotor blade (6) and the rotor (4) of the wind turbine (1) so that a stroke of the pitch cylinder (10) is kept smaller than a maximum permissible or maximum possible stroke of the pitch cylinder (10);
wherein the mechanical stop device (14) comprises a plate (15) having an opening (16) and a pin (17) arranged within the opening (16) with a gap between the pin (17) and the opening (16);
wherein the pin (17) is connected to one of the rotor (4) and the base (13) of the rotor blade (6), and the plate (15) is connected to the other one of the rotor (4) and the base (13) of the rotor blade (6);
wherein the gap is dimensioned to determine a moving path (P) along which the pin (17) can be moved within the opening (16) so as to limit the maximum relative rotation between the base (13) of the rotor blade (6) and the rotor (4) of the wind turbine (1),
**characterized in that**
the opening (16) of the plate (15) comprises a non-circular profile to provide a plurality of variable moving paths (P) for the pin (17) in accordance with a plurality of rotational positions of the plate (15), each moving path (P) is delimited by at least one abutment surface (18) for an abutment of the pin (17).

2. The device according to the preceding claim, wherein
the pin (17) is driven by a first actuator (21) to enter into or retract from the opening (16).

3. The device according to any one of claims 1 to 2,
wherein
wherein the plate (15) has a circular outer circumference and is rotatably received within the base (13) of the rotor blade (6).

4. The device according to any one of claims 1 to 3,
wherein
the plate (15) is rotatable driven by a second actuator.

5. The device according to any one of claims 1 to 4,
wherein
the second bracket (12) is connected to the base (13) of the rotor blade (6) of the wind turbine (1) at a location which is arranged radially further inwards than the mechanical stop device (14).

6. The device according to any one of claims 1 to 5,
wherein
the second bracket (12) is connected to the base (13) of the rotor blade (6) by means of bolts passing through elongated holes (22) which are provided in the base (13) of the rotor blade (6).

7. A wind turbine (1) comprising a rotor (4) having a plurality of rotor blades (6), each rotor blade (6) being configured to be pitched by a pitch angle about a pitch axis of the rotor blade (6), the rotor (4) being mounted to a nacelle (3) to rotate about a rotation axis (8) with a rotor speed to drive a generator (5) for producing electrical energy, the nacelle (3) being mounted to a tower (2) to rotate about a yaw axis (9),
**characterized by**
a device for protecting the pitch cylinder (10) according to any one of the preceding claims, wherein the first bracket (11) is connected to the rotor (4) of the wind turbine (1).

8. The wind turbine according to the preceding claim,
wherein
the base (13) of the rotor blade (6) is connected to a blade bearing (19), and the pin (17) is connected to the rotor (4) of the wind turbine (1).

9. The wind turbine according to any one of claims 7 and 8, wherein
the plate (15) is replaceable mounted to the base (13) of the rotor blade (6).

10. The wind turbine according to any one of claims 7 to 9, further comprising:
a further plate having another opening with another shape or another dimension than the opening (16), wherein the pin (17) is also configured to be arranged within the other opening with another gap between the pin (17) and the other opening;
wherein the pin (17) is connected to one of the rotor (4) and the base (13) of the rotor blade (6), and the further plate is connected to the other one of the rotor (4) and the base (13) of the rotor blade (6);
wherein the other opening (16) is dimensioned to determine another moving path along which the pin (17) can be moved so as to limit the maximum relative rotation between the base (13) of the rotor blade (6) and the rotor (4) of the wind turbine (1) so that the stroke of the pitch cylinder (10) is kept smaller than the maximum permissible or maximum possible stroke of the pitch cylinder (10);
wherein the plate (15) as well as the further plate are replaceable connectable to the other one of the rotor (4) and the base (13) of the rotor blade (6).

11. A method of protecting a hydraulic pitch cylinder (10) of a rotor blade (6) for a wind turbine (1) by means of the device for protecting a hydraulic pitch cylinder (10) according to any one of claims 1 to 6, wherein the device for protecting a hydraulic pitch cylinder (10) comprises a first actuator (21) for driving the pin (17) such that the pin (17) is driven to enter into or retract from the opening (16), the method comprises steps of:
Driving the first actuator (21) to retract the pin (17) from the opening (16); and
Pitching the rotor blade (6), when the pin (17) is retracted from the opening (16).

## Patentansprüche

1. Vorrichtung zum Schützen eines hydraulischen Neigungszylinders (10) einer Rotorschaufel (6) für eine Windturbine (1), wobei die Vorrichtung Folgendes umfasst:
eine Basis (13) der Rotorschaufel (6);
den Neigungszylinder (10), der eine erste Halterung (11) an einem Ende und eine zweite Halterung (12) an einem anderen Ende umfasst, wobei die erste Halterung (11) dazu konfiguriert ist, mit einem Rotor (4) der Windturbine (1) verbunden zu sein, und die zweite Halterung (12) mit der Basis (13) der Rotorschaufel (6) der Windturbine (1) verbunden ist; und
eine mechanische Anschlagvorrichtung (14), die dazu konfiguriert ist, eine maximale relative Drehung zwischen der Basis (13) der Rotorschaufel (6) und dem Rotor (4) der Windturbine (1) mechanisch zu begrenzen, sodass ein Hub des Neigungszylinders (10) kleiner als ein maximal zulässiger oder maximal möglicher Hub des Neigungszylinders (10) gehalten wird;
wobei die mechanische Anschlagvorrichtung (14) eine Platte (15) umfasst, die eine Öffnung (16) und einen Stift (17) aufweist, der innerhalb der Öffnung (16) mit einem Spalt zwischen dem Stift (17) und der Öffnung (16) angeordnet ist;
wobei der Stift (17) mit einem von dem Rotor (4) und der Basis (13) der Rotorschaufel (6) verbunden ist und die Platte (15) mit dem anderen von dem Rotor (4) und der Basis (13) der Rotorschaufel (6) verbunden ist;
wobei der Spalt dazu bemessen ist, einen Bewegungspfad (P) zu bestimmen, entlang dessen der Stift (17) innerhalb der Öffnung (16) bewegt werden kann, um die maximale relative Drehung zwischen der Basis (13) der Rotorschaufel (6) und dem Rotor (4) der Windturbine (1) zu begrenzen,
**dadurch gekennzeichnet, dass**
die Öffnung (16) der Platte (15) ein nicht kreisförmiges Profil umfasst, um eine Vielzahl variabler Bewegungspfade (P) für den Stift (17) gemäß einer Vielzahl von Drehpositionen der Platte (15) bereitzustellen, wobei jeder Bewegungspfad (P) durch mindestens eine Widerlagerfläche (18) für ein Widerlager des Stiftes (17) begrenzt ist.

2. Vorrichtung nach dem vorhergehenden Anspruch, wobei der Stift (17) durch einen ersten Aktor (21) dazu angetrieben wird, in die Öffnung (16) einzutreten oder sich aus dieser zurückzuziehen.

3. Vorrichtung nach einem der Ansprüche 1 bis 2, wobei wobei die Platte (15) einen kreisförmigen Außenumfang aufweist und innerhalb der Basis (13) der Rotorschaufel (6) drehbar aufgenommen ist.

4. Vorrichtung nach einem der Ansprüche 1 bis 3, wobei die Platte (15) durch einen zweiten Aktor drehbar angetrieben wird.

5. Vorrichtung nach einem der Ansprüche 1 bis 4, wobei die zweite Halterung (12) an einer Stelle, die radial weiter nach innen als die mechanische Anschlagvorrichtung (14) angeordnet ist, mit der Basis (13) der Rotorschaufel (6) der Windturbine (1) verbunden ist.

6. Vorrichtung nach einem der Ansprüche 1 bis 5, wobei die zweite Halterung (12) mittels Schrauben, die durch Langlöcher (22) verlaufen, die in der Basis (13) der Rotorschaufel (6) bereitgestellt sind, mit der Basis (13) der Rotorschaufel (6) verbunden ist.

7. Windturbine (1), umfassend einen Rotor (4), der eine Vielzahl von Rotorschaufeln (6) aufweist, wobei jede Rotorschaufel (6) dazu konfiguriert ist, um einen Neigungswinkel um eine Neigungsachse der Rotorschaufel (6) geneigt zu sein, wobei der Rotor (4) an einer Gondel (3) montiert ist, um sich mit einer Rotordrehzahl um eine Drehachse (8) zu drehen, um einen Generator (5) zum Produzieren elektrischer Energie anzutreiben, wobei die Gondel (3) an einem Turm (2) montiert ist, um sich um eine Gierachse (9) zu drehen, **gekennzeichnet durch** eine Vorrichtung zum Schützen des Neigungszylinders (10) nach einem der vorhergehenden Ansprüche, wobei die erste Halterung (11) mit dem Rotor (4) der Windturbine (1) verbunden ist.

8. Windturbine nach dem vorhergehenden Anspruch, wobei die Basis (13) der Rotorschaufel (6) mit einem Schaufellager (19) verbunden ist und der Stift (17) mit dem Rotor (4) der Windturbine (1) verbunden ist.

9. Windturbine nach einem der Ansprüche 7 und 8, wobei die Platte (15) austauschbar an der Basis (13) der Rotorschaufel (6) montiert ist.

10. Windturbine nach einem der Ansprüche 7 bis 9, ferner umfassend:
eine weitere Platte, die eine andere Öffnung mit einer anderen Form oder einer anderen Abmessung als die Öffnung (16) aufweist, wobei der Stift (17) ebenfalls dazu konfiguriert ist, innerhalb der anderen Öffnung mit einem anderen Spalt zwischen dem Stift (17) und der anderen Öffnung angeordnet zu sein;
wobei der Stift (17) mit einem von dem Rotor (4) und der Basis (13) der Rotorschaufel (6) verbunden ist und die weitere Platte mit dem anderen von dem Rotor (4) und der Basis (13) der Rotorschaufel (6) verbunden ist;
wobei die andere Öffnung (16) dazu bemessen ist, einen anderen Bewegungspfad zu bestimmen, entlang dessen der Stift (17) bewegt werden kann, um die maximale relative Drehung zwischen der Basis (13) der Rotorschaufel (6) und dem Rotor (4) der Windturbine (1) zu begrenzen, sodass der Hub des Neigungszylinders (10) kleiner als der maximal zulässige oder maximal mögliche Hub des Neigungszylinders (10) gehalten wird;
wobei die Platte (15) sowie die weitere Platte mit dem anderen von dem Rotor (4) und der Basis (13) der Rotorschaufel (6) austauschbar verbindbar sind.

11. Verfahren zum Schützen eines hydraulischen Neigungszylinders (10) einer Rotorschaufel (6) für eine Windturbine (1) mittels der Vorrichtung zum Schützen eines hydraulischen Neigungszylinders (10) nach einem der Ansprüche 1 bis 6, wobei die Vorrichtung zum Schützen eines hydraulischen Neigungszylinders (10) einen ersten Aktor (21) zum Antreiben des Stiftes (17) derart umfasst, dass der Stift (17) dazu angetrieben wird, in die Öffnung (16) einzutreten oder sich aus dieser zurückzuziehen, wobei das Verfahren die folgenden Schritte umfasst:
Antreiben des ersten Aktors (21), um den Stift (17) aus der Öffnung (16) zurückzuziehen; und
Neigen der Rotorschaufel (6), wenn der Stift (17) aus der Öffnung (16) zurückgezogen wird.

## Revendications

1. Dispositif pour protéger un vérin de pas hydraulique (10) d'une pale de rotor (6) pour une éolienne (1), le dispositif comprenant :
une base (13) de la pale de rotor (6) ;
le vérin de pas (10), qui comprend un premier support (11) à une extrémité et un second support (12) à une autre extrémité, dans lequel le premier support (11) est configuré pour être connecté à un rotor (4) de l'éolienne (1) et le second support (12) est connecté à la base (13) de la pale de rotor (6) de l'éolienne (1) ; et
un dispositif d'arrêt mécanique (14) qui est configuré pour limiter mécaniquement une rotation relative maximale entre la base (13) de la pale de rotor (6) et le rotor (4) de l'éolienne (1) de sorte qu'une course du vérin de pas (10) soit maintenue inférieure à une course maximale admissible ou maximale possible du vérin de pas (10) ;
dans lequel le dispositif d'arrêt mécanique (14) comprend une plaque (15) ayant une ouverture (16) et une broche (17) agencée à l'intérieur de l'ouverture (16) avec un jeu entre la broche (17) et l'ouverture (16) ;
dans lequel la broche (17) est connectée à l'un du rotor (4) et de la base (13) de la pale de rotor (6), et la plaque (15) est connectée à l'autre du rotor (4) et de la base (13) de la pale de rotor (6) ;
dans lequel le jeu est dimensionné pour déterminer un chemin de déplacement (P) le long duquel la broche (17) peut être déplacée à l'intérieur de l'ouverture (16) de sorte à limiter la rotation relative maximale entre la base (13) de la pale de rotor (6) et le rotor (4) de l'éolienne (1),
**caractérisé en ce que**
l'ouverture (16) de la plaque (15) comprend un profil non circulaire pour fournir une pluralité de chemins de déplacement variables (P) pour la broche (17) en conformité avec une pluralité de positions de rotation de la plaque (15), chaque chemin de déplacement (P) est délimité par au moins une surface de butée (18) pour une butée de la broche (17).

2. Dispositif selon la revendication précédente, dans lequel la broche (17) est entraînée par un premier actionneur (21) pour entrer dans ou se rétracter de l'ouverture (16).

3. Dispositif selon l'une quelconque des revendications 1 à 2, dans lequel
la plaque (15) a une circonférence extérieure circulaire et est reçue de manière rotative à l'intérieur de la base (13) de la pale de rotor (6).

4. Dispositif selon l'une quelconque des revendications 1 à 3, dans lequel
la plaque (15) est entraînée en rotation par un second actionneur.

5. Dispositif selon l'une quelconque des revendications 1 à 4, dans lequel
le second support (12) est connecté à la base (13) de la pale de rotor (6) de l'éolienne (1) à un emplacement qui est agencé radialement plus à l'intérieur que le dispositif d'arrêt mécanique (14).

6. Dispositif selon l'une quelconque des revendications 1 à 5, dans lequel
le second support (12) est connecté à la base (13) de la pale de rotor (6) au moyen de boulons passant à travers des trous allongés (22) qui sont prévus dans la base (13) de la pale de rotor (6).

7. Éolienne (1) comprenant un rotor (4) ayant une pluralité de pales de rotor (6), chaque pale de rotor (6) étant configurée pour être orientée selon un angle de pas autour d'un axe de pas de la pale de rotor (6), le rotor (4) étant monté sur une nacelle (3) pour tourner autour d'un axe de rotation (8) avec une vitesse de rotor pour entraîner un générateur (5) pour produire de l'énergie électrique, la nacelle (3) étant montée sur une tour (2) pour tourner autour d'un axe de lacet (9), **caractérisée par** un dispositif pour protéger le vérin de pas (10) selon l'une quelconque des revendications précédentes, dans laquelle le premier support (11) est connecté au rotor (4) de l'éolienne (1).

8. Éolienne selon la revendication précédente, dans laquelle la base (13) de la pale de rotor (6) est connectée à un roulement de pale (19), et la broche (17) est connectée au rotor (4) de l'éolienne (1).

9. Éolienne selon l'une quelconque des revendications 7 et 8, dans laquelle
la plaque (15) est montée de manière remplaçable sur la base (13) de la pale de rotor (6).

10. Éolienne selon l'une quelconque des revendications 7 à 9, comprenant en outre :
une plaque supplémentaire ayant une autre ouverture avec une autre forme ou une autre dimension que l'ouverture (16), dans laquelle la broche (17) est également configurée pour être agencée à l'intérieur de l'autre ouverture avec un autre jeu entre la broche (17) et l'autre ouverture ;
dans laquelle la broche (17) est connectée à l'un du rotor (4) et de la base (13) de la pale de rotor (6), et la plaque supplémentaire est connectée à l'autre du rotor (4) et de la base (13) de la pale de rotor (6) ;
dans laquelle l'autre ouverture (16) est dimensionnée pour déterminer un autre chemin de déplacement le long duquel la broche (17) peut être déplacée de sorte à limiter la rotation relative maximale entre la base (13) de la pale de rotor (6) et le rotor (4) de l'éolienne (1) de sorte que la course du vérin de pas (10) soit maintenue inférieure à la course maximale admissible ou maximale possible du vérin de pas (10) ;
dans laquelle la plaque (15) ainsi que la plaque supplémentaire sont connectables de manière remplaçable à l'autre du rotor (4) et de la base (13) de la pale de rotor (6).

11. Procédé de protection d'un vérin de pas hydraulique (10) d'une pale de rotor (6) pour une éolienne (1) au moyen du dispositif pour protéger un vérin de pas hydraulique (10) selon l'une quelconque des revendications 1 à 6, dans lequel le dispositif pour protéger un vérin de pas hydraulique (10) comprend un premier actionneur (21) pour entraîner la broche (17) de sorte que la broche (17) soit entraînée pour entrer dans ou se rétracter de l'ouverture (16), le procédé comprend les étapes consistant à :
entraîner le premier actionneur (21) pour rétracter la broche (17) de l'ouverture (16) ; et
orienter la pale de rotor (6), lorsque la broche (17) est rétractée de l'ouverture (16).
